# EUROPEAN PATENT APPLICATION

(11) **EP 3 561 752 A1**
(43) Date of publication of application: **30.10.2019**
(21) Application number: 19170560.7
(22) Date of filing: 23.04.2019
(51) Int. Cl.: G06Q 20/28, G06Q 20/32, G06Q 20/36, G06Q 20/38, G06Q 20/40

(54) **ELECTRONIC SYSTEM AND METHOD FOR FUNDING A PREPAID ACCOUNT**

(30) Priority: 24.04.2018 SG 10201803415S
(71) Applicant: Mastercard International Incorporated, Purchase NY 10577 (US)
(72) Inventor: GALLO, Francesco, 8045 Styria (AT); SINHA, Ajay, 411021 Maharashtra (IN)
(74) Representative: D Young & Co LLP

(57) **Abstract**

The present disclosure generally relates to an electronic system, a computerized method, and a non-transitory computer-readable storage medium comprising instructions for funding a prepaid account issued by a financial service provider to a consumer. The system comprises a server configured for performing steps of the method comprising: receiving, from an electronic device of the consumer, funding details comprising identification details of the prepaid account, details of a payment instrument of the consumer, and a funding amount; communicating an authentication request comprising the funding details to an issuer financial institution of the consumer payment instrument, the authentication request for communicating a one-time authentication code to the consumer; receiving, from the issuer financial institution, a transaction reference associated with the authentication code; receiving, from the consumer electronic device, authentication data encrypted using the authentication code and/or a predefined passcode of the consumer payment instrument provided by the consumer; generating transaction data comprising the funding details, encrypted authentication data, and transaction reference; communicating a transaction request comprising the transaction data to the issuer financial institution, the transaction request for transferring the funding amount from the consumer payment instrument to a financial account of the financial service provider, in response to successful validation of the transaction data, by the issuer financial institution based on the funding details and transaction reference, said validation comprising decrypting the encrypted authentication data using the authentication code and/or predefined passcode; and updating the prepaid account with the funding amount in response to completion of said transferring of the funding amount.

## Description

### Technical Field

The present disclosure generally relates to an electronic system and method for funding a prepaid account. Particularly, the present disclosure describes various embodiments of an electronic system and method for funding a prepaid account, e.g. stored value account or card, issued by a financial service provider to a consumer.

### Background

Some consumers use prepaid accounts or cards to pay for transactions as such prepaid cards provide added convenience to consumers, and the consumers may accrue loyalty points / rebates on the prepaid accounts / cards. A prepaid account or card has a monetary value stored therein, and may thus be referred to as a stored value account / card. The prepaid account / card is issued by a financial institution, like credit cards which are issued by issuer financial institutions. Some examples of a prepaid account / card include Netspend® and MoneyCard®. The prepaid account / card may be issued by a bank or a credit card association. The prepaid account / card may have its monetary value deducted when a consumer uses it to pay for transactions, such as with a merchant. The monetary value of the prepaid account / card may be topped up or funded by the consumer when it becomes low. In some current situations, the consumer may use a digital wallet application on a mobile device to fund the prepaid account / card. The digital wallet is provided by a bank and allows the consumer to access his/her bank account and to transfer funds from the bank account to the prepaid account / card. However, this normally requires various authentication steps mandated by the bank, e.g. login details and/or signature. Furthermore, the consumer is restricted to use only the bank account associated with the digital wallet to fund the prepaid account / card.

Therefore, in order to address or alleviate at least one of the aforementioned problems and/or disadvantages, there is a need to provide an electronic system and method for funding a prepaid account in which there is at least one improved feature.

### Summary

According to a first aspect of the present disclosure, there is an electronic system, a computerized method, and a non-transitory computer-readable storage medium comprising instructions for funding a prepaid account issued by a financial service provider to a consumer. The system comprises a server configured for performing steps of the method comprising: receiving, from an electronic device of the consumer, funding details comprising identification details of the prepaid account, details of a payment instrument of the consumer, and a funding amount; communicating an authentication request comprising the funding details to an issuer financial institution of the consumer payment instrument, the authentication request for communicating a one-time authentication code to the consumer; receiving, from the issuer financial institution, a transaction reference associated with the authentication code; receiving, from the consumer electronic device, authentication data encrypted using the authentication code and/or a predefined passcode of the consumer payment instrument provided by the consumer; generating transaction data comprising the funding details, encrypted authentication data, and transaction reference; communicating a transaction request comprising the transaction data to the issuer financial institution, the transaction request for transferring the funding amount from the consumer payment instrument to a financial account of the financial service provider, in response to successful validation of the transaction data, by the issuer financial institution based on the funding details and transaction reference, said validation comprising decrypting the encrypted authentication data using the authentication code and/or predefined passcode; and updating the prepaid account with the funding amount in response to completion of said transferring of the funding amount.

According to a second aspect of the present disclosure, there is an electronic system, a computerized method, and a non-transitory computer-readable storage medium comprising instructions for funding a prepaid account issued by a financial service provider to a consumer. The system comprises an electronic device of the consumer configured for performing steps of the method comprising: communicating funding details to a remote server, the funding details provided by the consumer and comprising identification details of the prepaid account, details of a payment instrument of the consumer, and a funding amount; generating authentication data from a predefined passcode of the consumer payment instrument and/or a one-time authentication code provided by the consumer, the authentication code communicated from an issuer financial institution of the consumer payment instrument to the consumer; encrypting the authentication data using the authentication code and/or predefined passcode; communicating the encrypted authentication data to the remote server for generating transaction data, the transaction data comprising the funding details, encrypted authentication data, and a transaction reference associated with the authentication code, the transaction reference communicated from the issuer financial institution to the remote server; and receiving a funds transfer confirmation message that the prepaid account has been updated with the funding amount in response to completion of transferring the funding amount from the consumer payment instrument to a financial account of the financial service provider, wherein said transferring occurs in response to successful validation of the transaction data, by the issuer financial institution, based on the funding details and transaction reference, said validation comprising decrypting the encrypted authentication data using the authentication code and/or predefined passcode.

According to a third aspect of the present disclosure, there is an electronic system, a computerized method, and a non-transitory computer-readable storage medium comprising instructions for funding a prepaid account issued by a financial service provider to a consumer. The system comprises a server configured for performing steps of the method comprising: receiving, from an electronic device of the consumer, funding details comprising identification details of the prepaid account, details of a payment instrument of the consumer, and a funding amount; communicating an authentication request comprising the funding details to an issuer financial institution of the consumer payment instrument, the authentication request for communicating a one-time authentication code to the consumer; receiving, from the issuer financial institution, a transaction reference associated with the authentication code; receiving, from the consumer electronic device, authentication data comprising the authentication code; generating transaction data comprising the funding details, authentication data, and transaction reference; communicating a transaction request comprising the transaction data to the issuer financial institution, the transaction request for transferring the funding amount from the consumer payment instrument to a financial account of the financial service provider, in response to successful validation of the transaction data, by the issuer financial institution based on the funding details and transaction reference; and updating the prepaid account with the funding amount in response to completion of said transferring of the funding amount.

An electronic system and method for funding a prepaid account according to the present disclosure are thus disclosed herein. Various features, aspects, and advantages of the present disclosure will become more apparent from the following detailed description of the embodiments of the present disclosure, by way of nonlimiting examples only, along with the accompanying drawings.

### Brief Description of the Drawings

FIG. 1 is an illustration of an electronic system for funding a prepaid account, in accordance with embodiments of the present disclosure.
FIG. 2 is a flowchart illustration of a computerized method performed on a server for funding a prepaid account, in accordance with embodiments of the present disclosure.
FIG. 3 is a flowchart illustration of a computerized method performed on a consumer electronic device for funding a prepaid account, in accordance with embodiments of the present disclosure.
FIG. 4 is a schematic illustration of a computerized method for funding a prepaid account, in accordance with a first set of embodiments of the present disclosure.
FIG. 5 is a schematic illustration of a computerized method for funding a prepaid account, in accordance with a second set of embodiments of the present disclosure.
FIG. 6 is a schematic illustration of a computerized method for funding a prepaid account, in accordance with a third set of embodiments of the present disclosure.
FIG. 7 is a block diagram illustration of the technical architecture of the server, in accordance with embodiments of the present disclosure.

### Detailed Description

In the present disclosure, depiction of a given element or consideration or use of a particular element number in a particular figure or a reference thereto in corresponding descriptive material can encompass the same, an equivalent, or an analogous element or element number identified in another figure or descriptive material associated therewith. The use of "/" in a figure or associated text is understood to mean "and/or" unless otherwise indicated. For purposes of brevity and clarity, descriptions of embodiments of the present disclosure are directed to an electronic system and method for funding a prepaid account, in accordance with the drawings. While aspects of the present disclosure will be described in conjunction with the embodiments provided herein, it will be understood that they are not intended to limit the present disclosure to these embodiments. On the contrary, the present disclosure is intended to cover alternatives, modifications and equivalents to the embodiments described herein, which are included within the scope of the present disclosure as defined by the appended claims. Furthermore, in the following detailed description, specific details are set forth in order to provide a thorough understanding of the present disclosure. However, it will be recognized by an individual having ordinary skill in the art, i.e. a skilled person, that the present disclosure may be practiced without specific details, and/or with multiple details arising from combinations of aspects of particular embodiments. In a number of instances, known systems, methods, procedures, and components have not been described in detail so as to not unnecessarily obscure aspects of the embodiments of the present disclosure.

### Overview

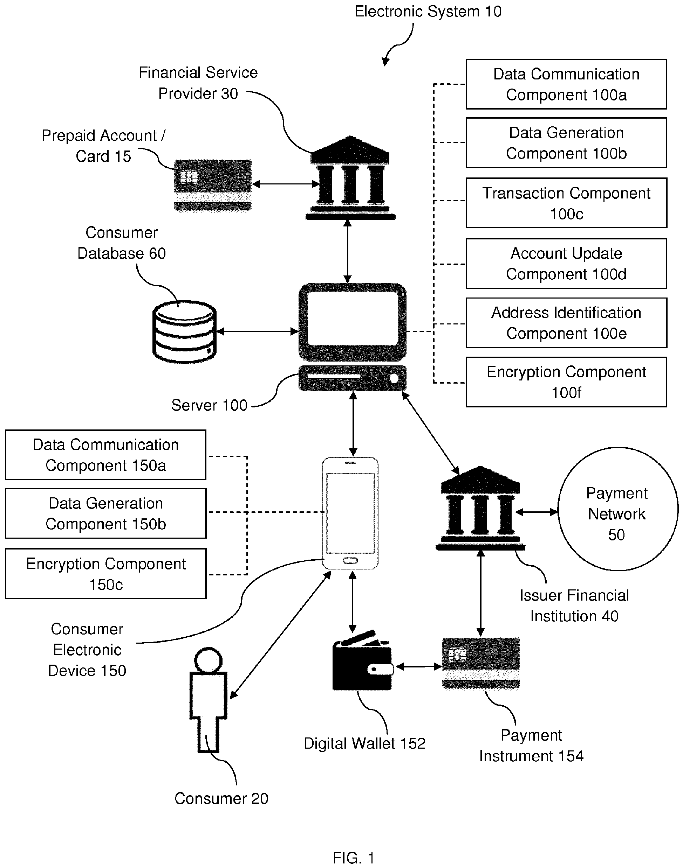

In representative or exemplary embodiments of the present disclosure, there is an electronic system 10 for funding a prepaid account / card 15 issued to a consumer 20, as illustrated in FIG. 1. The system 10 includes a financial service provider 30 and one or more issuer financial institutions 40. The prepaid account 15 is issued by the financial service provider 30 which may be a financial institution. For example, the financial service provider 30 is a bank or a credit card association such as Mastercard® or Visa®. The system 10 further includes a server 100 operated by the financial service provider 30. The system 10 further includes a payment network 50 communicatively connected to the issuer financial institutions 40 for performing various financial transactions, e.g. for funds transfer from the consumer 20 to the financial service provider 30 for funding the prepaid account 15. Particularly, the payment network 50 links together various issuer financial institutions 40 and acquirer financial institutions (such as for the financial service provider 30), usually via an intermediary financial entity such as a payment network operator, to perform the transactions. Each issuer financial institution 40 operates its own computer processors / servers that are communicatively linked to the payment network 50. The payment network 50 may be operated by an intermediary financial entity or a payment network operator, such as Mastercard® or Visa®.

The system 10 includes an electronic device 150 of the consumer 20. A software application is executable on the consumer electronic device 150 to operate a digital wallet 152. The digital wallet 152 is linked to one or more payment instruments 154 of the consumer 20, such that transactions made using the digital wallet 152 are paid with the consumer payment instruments 154. A consumer payment instrument 154 is issued by an issuer financial institution 40 and which the consumer 20 may use to pay for transactions. In some embodiments, the consumer payment instrument 154 is a debit card or financial / bank account.

The consumer electronic device 150 is thus operative to function as the digital wallet 152 by executing the software application or digital wallet application (collectively referred to as "mobile application"). The mobile application is provided by the financial service provider 30 and communicates / cooperates with a host application hosted on the server 100. The system 10 further includes a consumer database 60 storing details of consumers 20 who use the mobile application.

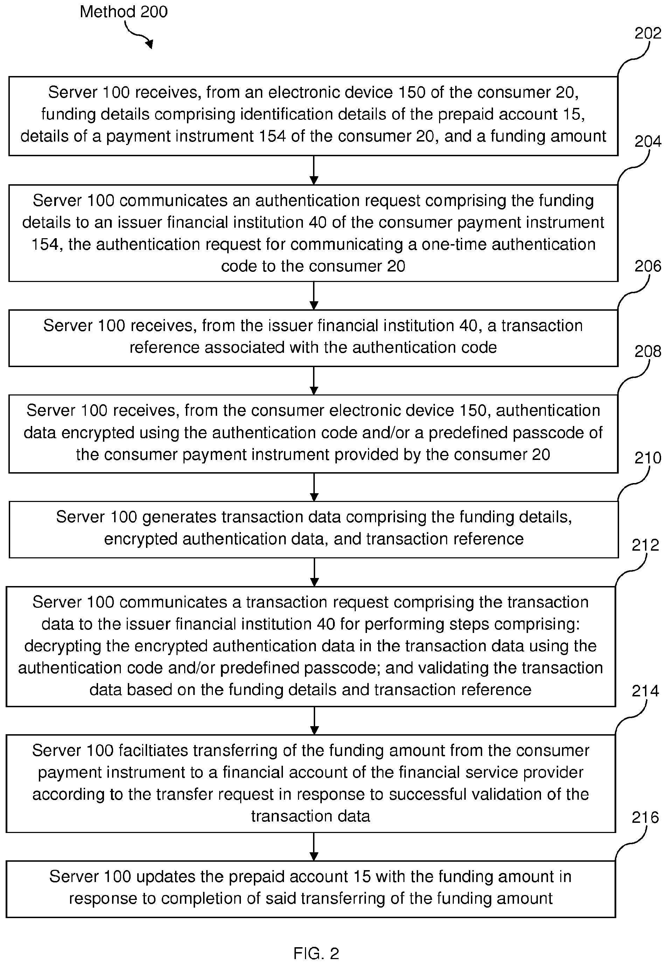

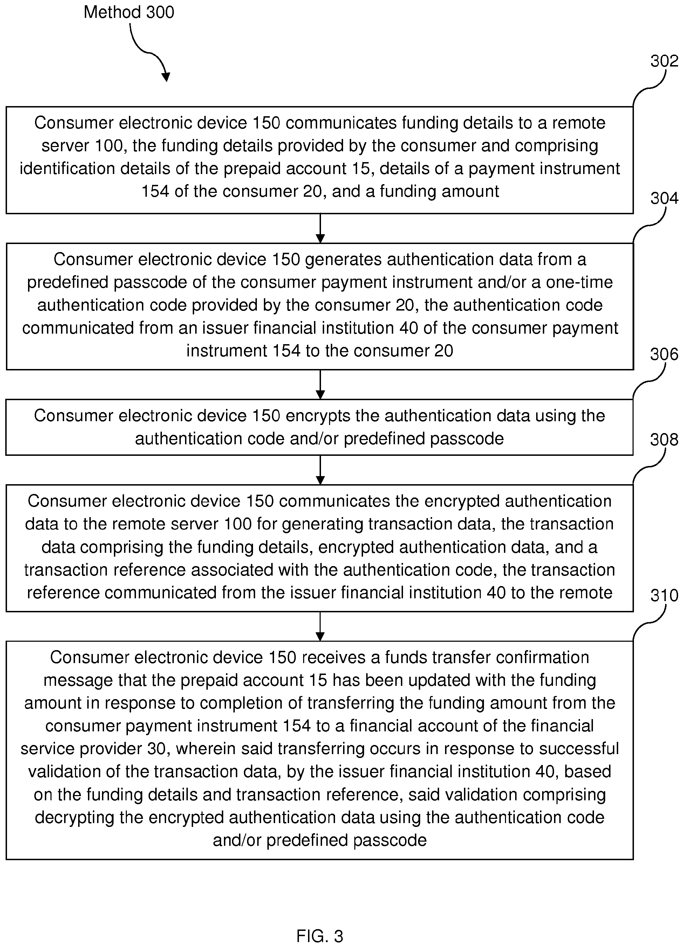

Further with reference to FIG. 2 and FIG. 3, there is shown a computer-implemented or computerized method 200 implemented on the server 100 and a corresponding computer-implemented or computerized method 300 implemented on the consumer electronic device 150 for funding the prepaid account 15. The mobile application is executed on the consumer electronic device 150 and communicates / cooperates with the host application hosted on the server 100 to perform the methods 200 and 300. The mobile application provides a user interface accessible by the consumer 20 with the consumer electronic device 150 to operate the digital wallet 152 linked to a consumer payment instrument 154 to fund the prepaid account 15.

The consumer 20 initiates a funds transfer transaction by executing the mobile application on the consumer electronic device 150 and providing funding details. In a step 302 of the method 300, a data communication component / module 150a of the consumer electronic device 150 communicates the funding details to the server 100 which is remotely located from the consumer electronic device 150. Correspondingly, in a step 202 of the method 200, a data communication component / module 100a of the server 100 receives the funding details from the consumer electronic device 150. The funding details include identification details of the prepaid account 15, details of the consumer payment instrument 154, and a funding amount. The prepaid account identification details provide information on which prepaid account 15 to transfer funds, especially if the consumer 20 holds multiple prepaid accounts 15 from multiple financial service providers 30. The consumer payment instrument details provide information to the payment network 50 to effect the funds transfer. The funding amount determines the monetary value to transfer from the consumer payment instrument 154 to the prepaid account 15.

In a step 204, the server 100 communicates an authentication request including the funding details to the issuer financial institution 40 of the consumer payment instrument 154, the authentication request for communicating a one-time authentication code to the consumer 20. After the issuer financial institution 40 generates and communicates the authentication code to the consumer 20, the issuer financial institution 40 communicates a transaction reference associated with the authentication code to the server 100. The transaction reference enables the issuer financial institution 40 to subsequently identify the particular authentication code communicated to the consumer 20. Accordingly, in a step 206, the server 100 receives the transaction reference from the issuer financial institution 40.

After the consumer 20 receives the authentication code, e.g. via text message on the consumer electronic device 150, the consumer 20 provides the authentication code and/or a predefined passcode (e.g. PIN code) of the consumer payment instrument 154 via the consumer electronic device 150. In a step 304, a data generation component / module 150b of the consumer electronic device 150 generates authentication data from the the authentication code and/or predefined passcode.

In a step 306, an encryption component / module 150c of the consumer electronic device 150 encrypts the authentication data using the authentication code and/or predefined passcode. For example, the authentication data is encrypted using the authentication code and/or predefined passcode as an encryption key. In a step 308, the consumer electronic device 150 communicates the encrypted authentication data to the server 100 for generating transaction data. Correspondingly, in a step 208, the server 100 receives, from the consumer electronic device 150, the authentication data encrypted using the authentication code and/or predefined passcode of the consumer payment instrument 154 provided by the consumer 20. In a step 210, a data generation component / module 100b of the server 100 generates the transaction data including the encrypted authentication data and funding details such as details of the consumer payment instrument 154. The transaction data further includes the transaction reference associated with the authentication code. The transaction data is subsequently communicated to the issuer financial institution 40 to effect the funds transfer.

Specifically, in a step 212, a transaction component / module 100c of the server 100 communicates a transaction request including the transaction data to the issuer financial institution 40, the transaction request for transferring the funding amount, from the consumer payment instrument 154 to a financial account of the financial service provider. The issuer financial institution 40 decrypts the encrypted authentication data in the transaction data using the authentication code and/or predefined passcode, validates the transaction data based on the funding details and transaction reference. Said validation includes decrypting the encrypted authentication data using the authentication code and/or predefined passcode. As an example, the transaction data includes on the authentication data that is encrypted using the authentication code and/or predefined passcode as the encryption key. The issuer financial institution 40 is able to validate the transaction data by decrypting the authentication data using the same authentication code and/or predefined passcode as a decryption key, wherein the authentication code is identified based on the transaction reference. As the issuer financial institution 40 issued the authentication code and the consumer payment instrument 154, it has both the authentication code and the predefined passcode for the decryption.

In a step 214, the transaction component 100c facilitates transferring of the funding amount from the consumer payment instrument 154 to the financial account of the financial service provider according to the transfer request. It will be appreciated that said transferring is processed through the payment network 50 in a standard manner.

In a step 216, an account update component / module 100d of the server 100 updates the prepaid account 15 with the funding amount in response to completion of said transferring of the funding amount. Specifically, the prepaid account 15 is credited with the funding amount and a funds transfer message is communicated from the server 100 to the consumer electronic device 150. In a step 310, the consumer electronic device 150 receives the funds transfer confirmation message to inform the consumer 20 that the prepaid account 15 has been updated with the funding amount, i.e. the funding amount has been added to the prepaid account 15. The consumer 20 will thus be able to view the prepaid account 15 with the updated balance.

Therefore, the system 10, together with the methods 200 and 300, provides a convenient way for the consumer 20 to fund the prepaid account 15 using the consumer payment instrument 154. Authentication of the transaction is simpler as the consumer payment instrument 154 can be authenticated with an authentication code generated by the issuer financial institution 40 for the instant funds transfer transaction. Furthermore, as the mobile application is provided by the financial service provider 30 which is independent from the issuer financial institution 40, the consumer 20 can use any payment instrument 154 to fund the prepaid account 15.

### Description of Embodiments

In various embodiments of the present disclosure, the electronic system 10 includes the financial service provider 30 operating the server 100 and one or more issuer financial institutions 40 operating one or more issuer servers. The server 100 includes a processor, a data storage device or memory configured to store computer-readable instructions for processing thereby, and a data communication component / module 100a for communicating with one or more other data communication components and/or servers. It will be appreciated that an issuer financial institution 40 issues payment instruments 154 to consumers 20 who are customers of the issuer financial institution 40.

The system 10 is configured for funding a prepaid account 15 issued by the financial service provider 30 to the consumer 20. The prepaid account 15 may refer to a stored value account or card. The system 10 includes the consumer electronic device 150 which may be a mobile device, such as mobile phone, smartphone, personal digital assistant (PDA), tablet, laptop, or computer. As described above, there is a mobile application that is executable on the consumer electronic device 150 to operate the digital wallet 152. The mobile application communicates / cooperates with the host application which may be hosted on the server 100 or on a separate cloud computing system communicatively linked to the server 100. The mobile application provides a user interface accessible by the consumer 20 with the consumer electronic device 150 to operate the digital wallet 152 linked to a consumer payment instrument 154 to fund the prepaid account 15. The consumer 20 may first enroll or register with the financial service provider 30 via the mobile application. Enrolment information of the consumer 20 is stored on the consumer database 60. The consumer database 60 may reside locally on the server 100, or alternatively on a remote server or computer communicatively linked to the server 100.

The digital wallet 152 is linked to one or more payment instruments 154 of the consumer 20, such that transactions made using the digital wallet 152 are paid with the consumer payment instruments 154. The term "payment instrument" may refer to any suitable cashless payment mechanism, such as payment cards. The term "payment card" may refer to a credit card, debit card, or charge card which the consumer may use to pay for transactions. In addition to payment cards, the payment instruments 154 may include, but are not limited to, membership cards, promotional cards, frequent flyer cards, identification cards, gift cards, and/or any other payment cards that may hold payment card information and which may be stored electronically. It will be appreciated that the digital wallet 152 may alternatively be configured to receive prepaid funds or be recharged / reloaded with funds (e.g. from a financial or bank account of the consumer). In many embodiments, the consumer payment instrument 154 is issued by an issuer financial institution 40 and which the consumer 20 may use to pay for transactions. For example, the consumer payment instrument 154 is a debit card issued by the issuer financial institution 40 or a financial / bank account held at the issuer financial institution 40.

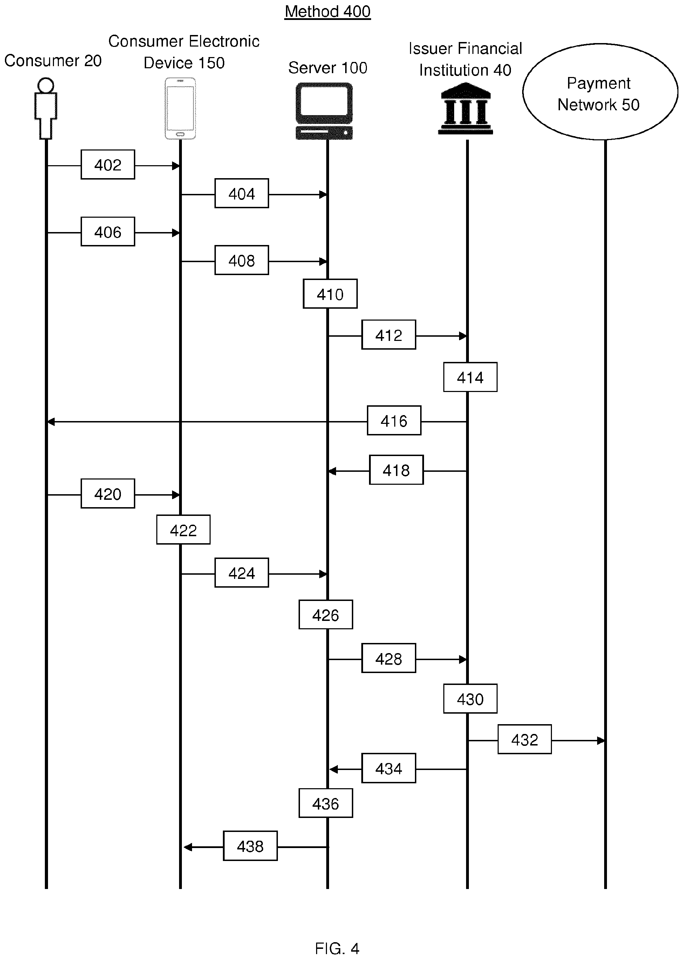

In a first set of embodiments with reference to FIG. 4, there is a computer-implemented or computerized method 400 implemented on the system 10 for funding the prepaid account 15. In a step 402, the consumer 20 executes the mobile application on the consumer electronic device 150 to initiate the funds transfer transaction. The consumer 20 provides consumer login details, such as user identifier and password, which are communicated to the server 100 for authentication. In a step 404, the server 100 receives and authenticates the consumer login details and enables the consumer 20 to access the mobile application. The consumer login details may additionally include biometric data for more secure authentication.

After accessing the mobile application, in a step 406, the consumer 20 provides funding details including identification details of the prepaid account 15, details of the consumer payment instrument 154, and a funding amount. The prepaid account identification details provide information on which prepaid account 15 to transfer funds, such as a name / identifier of the financial service provider 30 and a prepaid account number. In one embodiment, the prepaid account 15 is selected from a set of prepaid accounts 15 stored on and retrieved from the consumer database 60. In another embodiment, the prepaid account identification details are input by the consumer 20 and optionally saved on the consumer database 60. The consumer payment instrument details include an identifier of the consumer payment instrument 154 that provides information to the payment network 50 to effect the funds transfer. In some embodiments, the consumer payment instrument 154 is a debit card 154 and the identifier is the debit card number. The funding amount determines the monetary value to transfer from the debit card 154 to the prepaid account 15. In one embodiment, the funding amount is selected from a set of predefined funding amounts, such as $10, $20, and $50. In another embodiment, the funding amount is specifically defined by the consumer 20.

In a step 408, the consumer electronic device 150 communicates the funding details to the server 100 as a funds transfer request. The funding details may further include metadata or reference data associated with this instant funds transfer request. Optionally, in a step 410, an address identification component / module 100e of the server 100 identifies, from the consumer database 60, a communication address of the consumer 20 based on the prepaid account identification details and/or consumer payment instrument details. For example, during enrolment, the consumer 20 may provide a communication address together with the prepaid account 15 and payment instrument 154 details. The communication address may be a phone number and/or an email address for receiving electronic messages.

In a step 412, the server 100 communicates an authentication request including the funding details to the issuer financial institution 40 which issued the debit card 154. The issuer financial institution 40 may be identified from the debit card number. The authentication request includes a request for communicating a one-time authentication code to the consumer 20. The one-time authentication code can be used by the consumer 20 for one session only and will expire after a predefined duration, e.g. 120 seconds. In a step 414, the issuer financial institution 40 generates the authentication code. In a step 416, the issuer financial institution 40 communicates the authentication code to the consumer 20.

In one embodiment, the authentication request includes the communication address identified by the server 100 in the step 410, and the issuer financial institution 40 communicates the authentication code to the communication address. In another embodiment, the server 100 did not identify any communication address of the consumer 20, but the issuer financial institution 40 has existing records of a communication address of the consumers. In the step 416, the issuer financial institution 40 communicates the authentication code to the communication address on record. In another embodiment, the issuer financial institution 40 receives a first communication address identified by the server 100 in the step 410, and has on record a second communication address different from the first communication address. The issuer financial institution 40 may select which communication address to communicate the authentication code to, such as based on some risk assessment. For example, the issuer financial institution 40 may consider whether the first communication address identified by the server 100 is trustable. The issuer financial institution 40 may also choose to override the first communication address and communicate to the second communication address if the funding amount exceeds a predefined threshold, so as to provide added security to the consumer 20.

In the step 416, the authentication code may be communicated to the consumer 20 by electronic message to the communication address, such as a phone number and/or email to an email address. For example, the consumer 20 may receive the authentication code as a text message to a phone number linked to the consumer electronic device 150 and/or an email to an email address.

After the issuer financial institution 40 communicates the authentication code to the consumer 20, in a step 418, the issuer financial institution 40 communicates a transaction reference associated with the authentication code to the server 100. Optionally, the authentication code is communicated to the server 100 together with the transaction reference. The transaction reference is used in the subsequent transaction request to enable the issuer financial institution 40 to identify the particular authentication code that was communicated to the consumer 20. After the consumer 20 receives the authentication code, in a step 420, the consumer 20 provides the authentication code and/or the debit card PIN code (or more generally a predefined passcode of the consumer payment instrument 154) via the consumer electronic device 150.

In a step 422, the consumer electronic device 150 generates authentication data which includes the authentication code and/or the debit card PIN code. In some embodiments, the authentication data is encrypted by the encryption component 150c of the consumer electronic device 150 during generation thereof. In one embodiment, the authentication data is encrypted by standard encryption protocols predetermined between the financial service provider 30 and the issuer financial institution 40. In another embodiment, the encryption relies on a passcode-based encryption protocol. For example, the authentication data is encrypted using the authentication code and/or debit card PIN code as an encryption key. The encryption algorithm to use the encryption key may be predetermined between the financial service provider 30 and the issuer financial institution 40, such that the issuer financial institution 40 is able to decrypt the encrypted authentication data.

In one embodiment, the authentication data includes the debit card number (obtained from the funding details) that is encrypted using the authentication code and/or debit card PIN code as the encryption key. In another embodiment, the authentication data includes the debit card PIN code and the debit card number that is encrypted using only the authentication code as the encryption key. The use of the authentication code and/or debit card PIN code (predefined passcode) to encrypt the authentication data provides a form of user-specific and time-specific encryption.

In a step 424, the consumer electronic device 150 communicates the encrypted authentication data to the server 100 for generating the transaction data. In a step 426, the server 100 generates the transaction data from the authentication data. The transaction data includes the encrypted authentication data and funding details, particularly the debit card number. The transaction data further includes the transaction reference associated with the authentication code to enable the issuer financial institution 40 to decrypt the transaction data subsequently. Optionally, the server 100 has received the authentication code from the issuer financial institution 40 and the debit card PIN code from the consumer 20, and may perform an initial verification of the encrypted authentication data using the authentication code and/or debit card PIN code as a decryption key.

In a step 428, the server 100 communicates a transaction request including the transaction data to the issuer financial institution 40, the transaction request for transferring the funding amount, from the debit card 154 to the financial account of the financial service provider 30. The transaction data may be encrypted by an encryption component / module 100f of the server 100 before communicating the transaction request. After receiving the transaction request, in a step 430, the issuer financial institution 40 validates the transaction data based on the funding details and transaction reference. The validation includes the issuer financial institution 40 identifying the authentication code that was communicated to the consumer 20 based on the transaction reference. The transaction data includes the authentication data that is encrypted using the authentication code and/or debit card PIN code as the encryption key. The validation includes the issuer financial institution 40 decrypting the encrypted authentication data using the authentication code and/or debit card PIN code as the decryption key. As the issuer financial institution 40 issued the authentication code and the debit card 154, it has both the authentication code and the debit card PIN code for the decryption. After decrypting, the validation may include authenticating the predefined passcode or debit card PIN code to authorize deduction of the funding amount from the debit card 154.

In a step 432, the issuer financial institution 40 communicates with the payment network 50 to perform the funds transfer transaction to transfer the funding amount. The funds transfer transaction is performed in response to successful validation of the transaction data. It will be appreciated that the funds transfer transaction is processed by the payment network 50 in a standard manner readily known to the skilled person. The funding amount is debited from the debit card 154 and credited to the financial account of the financial service provider 30. Specifically, the funding amount is transferred from the issuer financial institution 40 (which issues the debit card 154) to an acquirer financial institution linked to the financial account of the financial service provider 30. In some embodiments, the acquirer financial institution and financial service provider 30 is the same financial institution.

In a step 434, the issuer financial institution 40 communicates a funds transfer message to the server 100 in response to completion of said transferring of the funding amount. In a step 436, the server 100 updates the prepaid account 15 with the funding amount, i.e. the current balance of the prepaid account 15 increases by the funding amount. In a step 438, the server 100 communicates a funds transfer confirmation message to the consumer electronic device 150 to inform the consumer 20 that the prepaid account 15 has been updated with the funding amount. The consumer 20 will thus be able to view the prepaid account 15 with the updated balance.

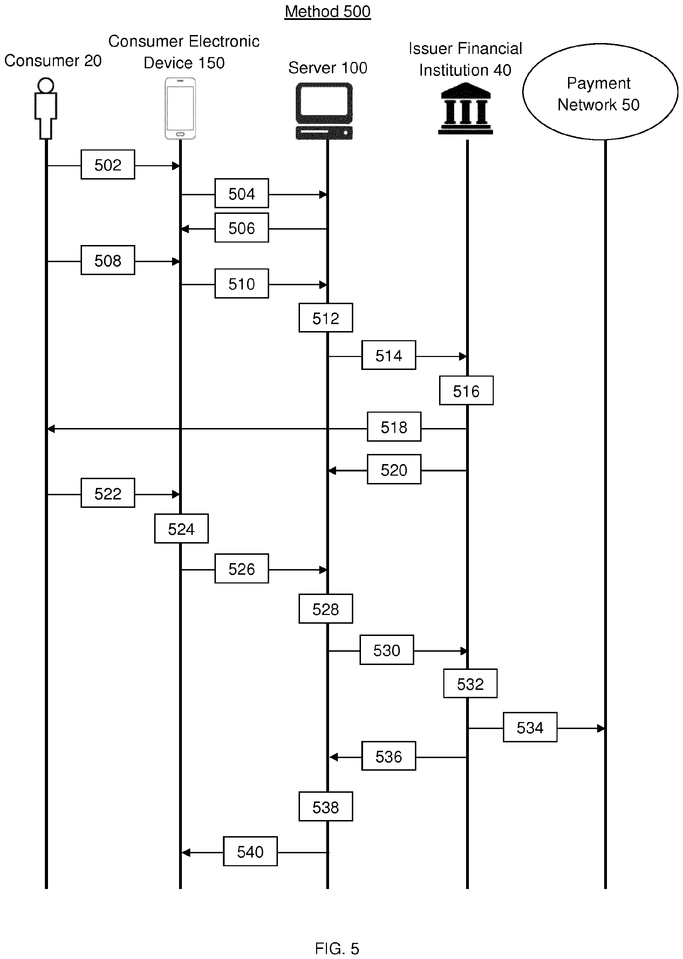

In a second set of embodiments with reference to FIG. 5, there is a computer-implemented or computerized method 500 implemented on the system 10 for funding the prepaid account 15. It will be appreciated that various aspects of the method 400 apply similarly or analogously to the method 500, and such aspects are omitted from the description of the method 500 for purpose of brevity. Vice versa, various aspects of the method 500 may apply similarly or analogously to the method 400. In a step 502, the consumer 20 executes the mobile application on the consumer electronic device 150 to initiate the funds transfer transaction. The consumer 20 provides consumer login details for authentication by the server 100. In a step 504, the server 100 receives and authenticates the consumer login details and enables the consumer 20 to access the mobile application.

After accessing the mobile application, the consumer 20 retrieves a saved set of consumer payment instruments 154 from the server 100. Specifically, in a step 506, the server 100 identifies the consumer 20 and retrieves the saved set of consumer payment instruments 154 from the consumer database 60. More specifically, the consumer payment instruments 154 are financial / bank accounts 154 of the consumer 20 with one or more issuer financial institutions / banks 40. Details of the saved consumer payment instruments 154 are communicated from the server 100 to the consumer electronic device 150.

In a step 508, the consumer 20 provides funding details including identification details of the prepaid account 15, details of the consumer financial account 154, and a funding amount. In one embodiment, the consumer financial account is selected from the saved set of financial accounts. In another embodiment, the consumer financial account identification details are input by the consumer 20 and optionally saved on the consumer database 60. The consumer financial account details include an identifier of the consumer financial account 154, e.g. account number, as well as an identifier of the issuer financial institution 40 to effect the funds transfer. The funding amount may be selected from a set of predefined funding amounts, or specifically defined by the consumer 20.

In a step 510, the consumer electronic device 150 communicates the funding details to the server 100 as a funds transfer request. Optionally, in a step 512, the server 100 identifies, from the consumer database 60, a communication address of the consumer 20. In a step 514, the server 100 communicates an authentication request including the funding details to the issuer financial institution 40 of the consumer financial account 154. The authentication request includes a request for communicating a one-time authentication code to the consumer 20. In a step 516, the issuer financial institution 40 generates the authentication code, and in a step 518, the issuer financial institution 40 communicates the authentication code to the consumer 20. It will be appreciated that the authentication code may be communicated to the communication address identified by the server 100 or on record with the issuer financial institution 40.

After the issuer financial institution 40 communicates the authentication code to the consumer 20, in a step 520, the issuer financial institution 40 communicates a transaction reference associated with the authentication code to the server 100. Optionally, the authentication code is communicated to the server 100 together with the transaction reference. After the consumer 20 receives the authentication code, in a step 522, the consumer 20 provides the authentication code and/or predefined passcode (e.g. password or PIN code) of the consumer financial account 154 via the consumer electronic device 150.

In a step 524, the consumer electronic device 150 generates authentication data which includes the authentication code and/or predefined passcode. Optionally, the authentication data is encrypted by the consumer electronic device 150 during generation thereof. In a step 526, the consumer electronic device 150 communicates the authentication data to the server 100 for generating the transaction data. Optionally, the server 100 has received the authentication code from the issuer financial institution 40, and may perform an initial verification of the authentication data.

In a step 528, the server 100 generates the transaction data from the authentication data. The transaction data includes the authentication code and funding details, particularly the consumer financial account identification details. The transaction data further includes the transaction reference associated with the authentication code to enable authentication by the issuer financial institution 40.

In a step 530, the server 100 communicates a transaction request including the transaction data to the issuer financial institution 40, the transaction request for transferring the funding amount, from the consumer financial account 154 to the financial account of the financial service provider 30. The transaction data may be encrypted by the server 100 before communicating the transaction request. After receiving the transaction request, in a step 532, the issuer financial institution 40 validates the transaction data based on the funding details and transaction reference. The validation includes the issuer financial institution 40 authenticating the authentication code based on the transaction reference. The validation may further include authenticating the predefined passcode to authorize deduction of the funding amount from the consumer financial account 154. The transaction data may be encrypted, and the validation may include decrypting the encrypted transaction data first. It will be appreciated that the financial service provider 30 and issuer financial institution 40 may predetermine encryption protocols between them.

In a step 534, the issuer financial institution 40 communicates with the payment network 50 to perform the funds transfer transaction to transfer the funding amount. The funds transfer transaction is performed in response to successful validation of the transaction data. It will be appreciated that the funds transfer transaction is processed by the payment network 50 in a standard manner readily known to the skilled person.

In a step 536, the issuer financial institution 40 communicates a funds transfer message to the server 100 in response to completion of said transferring of the funding amount. In a step 538, the server 100 updates the prepaid account 15 with the funding amount. In a step 540, the server 100 communicates a funds transfer confirmation message to the consumer electronic device 150 to inform the consumer 20 that the prepaid account 15 has been updated.

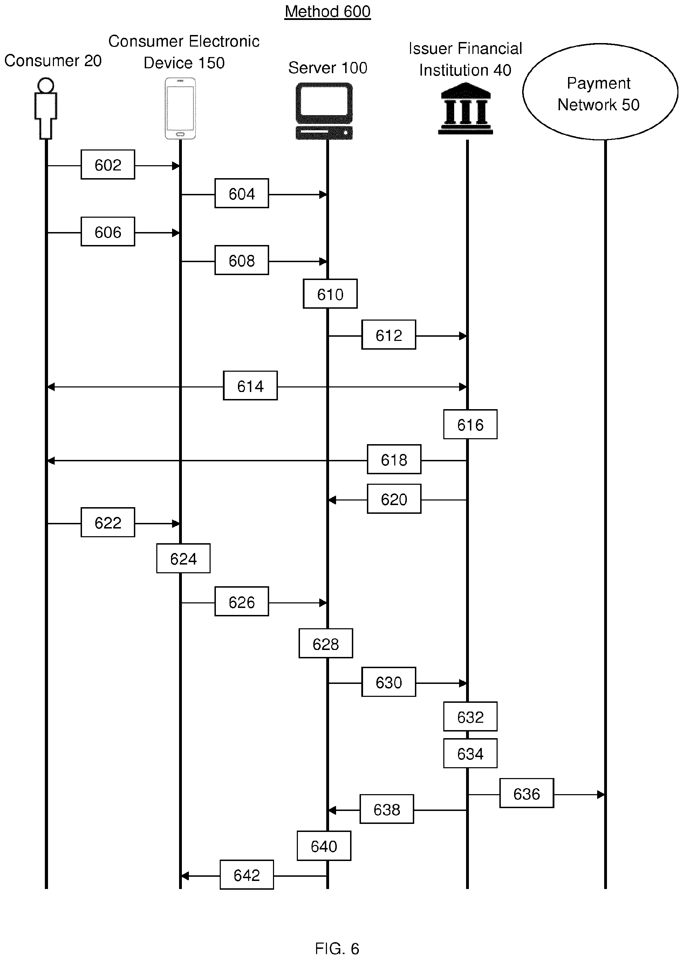

In a third set of embodiments with reference to FIG. 6, there is a computer-implemented or computerized method 600 implemented on the system 10 for funding the prepaid account 15. It will be appreciated that various aspects of the methods 400 and/or 500 apply similarly or analogously to the method 600, and such aspects are omitted from the description of the method 600 for purpose of brevity. Vice versa, various aspects of the method 600 may apply similarly or analogously to the methods 400 and/or 500. In a step 602, the consumer 20 executes the mobile application on the consumer electronic device 150 to initiate the funds transfer transaction. The consumer 20 provides consumer login details for authentication by the server 100. In a step 604, the server 100 receives and authenticates the consumer login details and enables the consumer 20 to access the mobile application.

After accessing the mobile application, in a step 606, the consumer 20 provides funding details including identification details of the prepaid account 15, details of the consumer payment instrument 154, and a funding amount. Specifically, the consumer payment instrument 154 is a debit card 154 and the consumer payment instrument details include an identifier of the debit card 154, e.g. debit card number. More specifically, the debit card identifier is partial and includes a sequence of digits at a plurality of digit positions thereof. For example, a typical complete debit card identifier has 16 digits at 16 digit positions. The partial debit card identifier includes a sequence of digits at a plurality of random digit positions among the 16 digit positions. In one embodiment, the partial debit card identifier includes the sequence of digits in at least 6 random digit positions. The plurality of digit positions for inputting the sequence of digits may be suitably predetermined to enable the issuer financial institution 40 to derive and identify the complete debit card identifier based on the sequence of digits.

In a step 608, the consumer electronic device 150 communicates the funding details to the server 100 as a funds transfer request. Optionally, in a step 610, the server 100 identifies, from the consumer database 60, a communication address of the consumer 20. In a step 612, the server 100 communicates an authentication request including the funding details to the issuer financial institution 40. The authentication request includes a request for communicating a one-time authentication code to the consumer 20.

In one embodiment, the partial debit card identifier contains sufficient digit positions and the sequence of digits in these digit positions enable the issuer financial institution 40 to derive the complete debit card identifier, thereby identifying the consumer 20. In another embodiment, the partial debit card identifier contains insufficient digit positions and the issuer financial institution 40 is unable to derive the complete debit card identifier. There is an iterative step 614 wherein the issuer financial institution 40 communicates a request to the server 100 for the consumer 20 to revise the partial debit card identifier. The revised partial debit card identifier may include a different arrangement of the initial digit positions, or include additional digit positions such that there is a longer sequence of digits.

In a step 616, the issuer financial institution 40 generates the authentication code, and in a step 618, the issuer financial institution 40 communicates the authentication code to the consumer 20. Subsequently, in a step 620, the issuer financial institution 40 communicates a transaction reference associated with the authentication code to the server 100. Optionally, the authentication code is communicated to the server 100 together with the transaction reference. After the consumer 20 receives the authentication code, in a step 622, the consumer 20 provides the authentication code and/or debit card PIN code.

In a step 624, the consumer electronic device 150 generates authentication data which includes the authentication code and/or the debit card PIN code. In a step 626, the consumer electronic device 150 communicates the authentication data to the server 100 for generating the transaction data. Optionally, the server 100 has received the authentication code from the issuer financial institution 40, and may perform an initial verification of the authentication data.

In a step 628, the server 100 generates the transaction data from the authentication data. The transaction data includes the authentication code and/or debit card PIN code, and further includes the funding details, particularly the partial debit card identifier. The transaction data further includes the transaction reference associated with the authentication code to enable authentication by the issuer financial institution 40.

In a step 630, the server 100 communicates a transaction request including the transaction data to the issuer financial institution 40, the transaction request for transferring the funding amount, from the debit card 154 to the financial account of the financial service provider 30. After receiving the transaction request, in a step 632, the issuer financial institution 40 derives the complete identifier of the debit card 154 based on the partial debit card identifier. In a step 634, the issuer financial institution 40 validates the transaction data based on the funding details and transaction reference. The validation includes the issuer financial institution 40 authenticating the authentication code based on the transaction reference. The validation may include authenticating the debit card PIN code to authorize deduction of the funding amount from the debit card 154.

For purpose of brevity, it will be appreciated that encryption / decryption protocols described above for the methods 400 and 500 may apply similarly or analogously to the method 600.

In a step 636, the issuer financial institution 40 communicates with the payment network 50 to perform the funds transfer transaction to transfer the funding amount. The funds transfer transaction is performed in response to successful validation of the transaction data. It will be appreciated that the funds transfer transaction is processed by the payment network 50 in a standard manner readily known to the skilled person.

In a step 638, the issuer financial institution 40 communicates a funds transfer message to the server 100 in response to completion of said transferring of the funding amount. In a step 640, the server 100 updates the prepaid account 15 with the funding amount. In a step 642, the server 100 communicates a funds transfer confirmation message to the consumer electronic device 150 to inform the consumer 20 that the prepaid account 15 has been updated.

As disclosed in various embodiments herein, the methods 400 / 500 / 600 provide a convenient way for the consumer 20 to fund the prepaid account 15 using the consumer payment instrument 154, e.g. a debit card or financial account. The consumer 20 performs the funds transfer transaction by executing the mobile application on the consumer electronic device 150 and furnishing the consumer payment instrument details. Authentication of the transaction is simpler as the consumer payment instrument 154 can be authenticated with a one-time authentication code generated by the issuer financial institution 40 for the instant funds transfer transaction. Alternatively or additionally, the consumer 20 may further use a predefined passcode of the consumer payment instrument 154, e.g. debit card PN code, to authenticate the transaction and authorize the debiting of funds from the consumer payment instrument 154. Furthermore, as the mobile application is provided by the financial service provider 30 which is independent from the issuer financial institution 40, the consumer 20 can use any payment instrument 154, e.g. debit cards / financial accounts from any issuer financial institution / bank 40, to generically fund the prepaid account 15. The consumer 20 is not restricted to use a bank digital wallet and a particular bank account of the digital wallet to fund the prepaid account 15.

### Technical Architecture

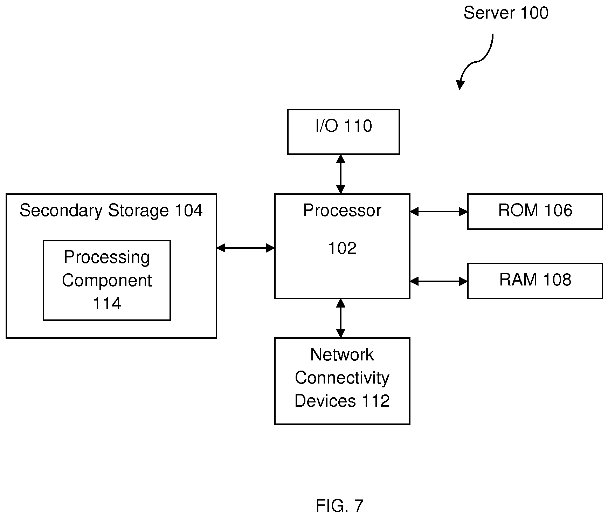

The following is a description of the technical architecture of the server 100 with reference to FIG. 7. It will be appreciated that the consumer electronic device 150 may have a similar technical architecture as the server 100.

The technical architecture of the server 100 includes a processor 102 (also referred to as a central processor unit or CPU) that is in communication with memory devices including secondary storage 104 (such as disk drives or memory cards), read only memory (ROM) 106, and random access memory (RAM) 108. The processor 102 may be implemented as one or more CPU chips. Various modules or components for performing various operations or steps of the methods 200 / 300 / 400 / 500 / 600 are configured as part of the processor 102 and such operations or steps are performed in response to non-transitory instructions operative or executed by the processor 102.

The technical architecture further includes input/output (I/O) devices 110, and network connectivity devices 112. The secondary storage 104 typically includes a memory card or other storage device and is used for non-volatile storage of data and as an over-flow data storage device if RAM 108 is not large enough to hold all working data. Secondary storage 104 may be used to store programs which are loaded into RAM 108 when such programs are selected for execution.

The secondary storage 104 has a processing component 114, including non-transitory instructions operative by the processor 102 to perform various operations or steps of the methods 200 / 300 / 400 / 500 / 600 according to various embodiments of the present disclosure. The ROM 106 is used to store instructions and perhaps data which are read during program execution. The secondary storage 104, the ROM 106, and/or the RAM 108 may be referred to in some contexts as computer-readable storage media and/or non-transitory computer-readable media. Non-transitory computer-readable media include all computer-readable media, with the sole exception being a transitory propagating signal per se.

The I/O devices 110 may include printers, video monitors, liquid crystal displays (LCDs), plasma displays, touch screen displays, keyboards, keypads, switches, dials, mice, track balls, voice recognizers, card readers, paper tape readers, and/or other known input devices.

The network connectivity devices 112 may take the form of modems, modem banks, Ethernet cards, universal serial bus (USB) interface cards, serial interfaces, token ring cards, fibre distributed data interface (FDDI) cards, wireless local area network (WLAN) cards, radio transceiver cards that promote radio communications using protocols such as code division multiple access (CDMA), global system for mobile communications (GSM), long-term evolution (LTE), worldwide interoperability for microwave access (WiMAX), near field communication (NFC), radio frequency identity (RFID), and/or other air interface protocol radio transceiver cards, and other known network devices. These network connectivity devices 112 may enable the processor 102 to communicate with the Internet or one or more intranets. With such a network connection, it is contemplated that the processor 102 might receive information from the network, or might output information to the network in the course of performing the operations or steps of the methods 200 / 300 / 400 / 500 / 600. Such information, which is often represented as a sequence of instructions to be executed using processor 102, may be received from and outputted to the network, for example, in the form of a computer data signal embodied in a carrier wave.

The processor 102 executes instructions, codes, computer programs, scripts which it accesses from hard disk, floppy disk, optical disk (these various disk based systems may all be considered secondary storage 104), flash drive, ROM 106, RAM 108, or the network connectivity devices 112. While only one processor 102 is shown, multiple processors may be present. Thus, while instructions may be discussed as executed by a processor, the instructions may be executed simultaneously, serially, or otherwise executed by one or multiple processors.

It will be appreciated that the technical architecture of the server 100 may be formed by one computer, or multiple computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the multiple computers. In an embodiment, virtualization software may be employed by the technical architecture to provide the functionality of a number of servers that is not directly bound to the number of computers in the technical architecture. In an embodiment, the functionality disclosed above may be provided by executing the application and/or applications in a cloud computing environment. Cloud computing may include providing computing services via a network connection using dynamically scalable computing resources. A cloud computing environment may be established by an enterprise and/or may be hired on an as-needed basis from a third party provider.

It is understood that by programming and/or loading executable instructions onto the technical architecture of the server 100, at least one of the CPU 102, the ROM 106, and the RAM 108 are changed, transforming the technical architecture in part into a specific purpose machine or apparatus having the functionality as taught by various embodiments of the present disclosure. It is fundamental to the electrical engineering and software engineering arts that functionality that can be implemented by loading executable software into a computer can be converted to a hardware implementation by known design rules.

In the foregoing detailed description, embodiments of the present disclosure in relation to an electronic system and method for funding a prepaid account are described with reference to the provided figures. The description of the various embodiments herein is not intended to call out or be limited only to specific or particular representations of the present disclosure, but merely to illustrate nonlimiting examples of the present disclosure. The present disclosure serves to address at least one of the mentioned problems and issues associated with the prior art. Although only some embodiments of the present disclosure are disclosed herein, it will be apparent to a person having ordinary skill in the art in view of this disclosure that a variety of changes and/or modifications can be made to the disclosed embodiments without departing from the scope of the present disclosure. Therefore, the scope of the disclosure as well as the scope of the following claims is not limited to embodiments described herein.

## Claims

1. An electronic system for funding a prepaid account issued by a financial service provider to a consumer, the system comprising a server configured for performing steps comprising:
receiving, from an electronic device of the consumer, funding details comprising identification details of the prepaid account, details of a payment instrument of the consumer, and a funding amount;
communicating an authentication request comprising the funding details to an issuer financial institution of the consumer payment instrument, the authentication request for communicating a one-time authentication code to the consumer;
receiving, from the issuer financial institution, a transaction reference associated with the authentication code;
receiving, from the consumer electronic device, authentication data encrypted using the authentication code and/or a predefined passcode of the consumer payment instrument provided by the consumer;
generating transaction data comprising the funding details, encrypted authentication data, and transaction reference;
communicating a transaction request comprising the transaction data to the issuer financial institution for performing steps comprising:
decrypting the encrypted authentication data in the transaction data using the authentication code and/or predefined passcode; and
validating the transaction data based on the funding details and transaction reference;
facilitating transferring of the funding amount from the consumer payment instrument to a financial account of the financial service provider according to the transfer request in response to successful validation of the transaction data; and
updating the prepaid account with the funding amount in response to completion of said transferring of the funding amount.

2. The system according to claim 1, the steps further comprising receiving, from the consumer electronic device, and authenticating consumer login details before receiving the funding details.

3. The system according to claim 1 or 2, the steps further comprising identifying, from a consumer database, a communication address of the consumer based on the prepaid account identification details and/or consumer payment instrument details, wherein the authentication request further comprises the communication address for receiving the authentication code.

4. The system according to any one of claims 1 to 3, wherein the consumer payment instrument details comprise an identifier of the consumer payment instrument.

5. The system according to any one of claims 1 to 4, wherein the authentication data is encrypted by the consumer electronic device using the authentication code and/or predefined passcode as an encryption key.

6. The system according to claim 5, wherein the encrypted authentication data is decrypted, by the issuer financial institution, using the authentication code and/or predefined passcode as a decryption key, the authentication code identified by the issuer financial institution based on the transaction reference.

7. The system according to claim 6, wherein validation of the transaction data comprises authenticating, by the issuer financial institution, the predefined passcode of the consumer payment instrument.

8. The system according to any one of claims 1 to 7, wherein the consumer payment instrument identifier is partial and comprises a sequence of digits at a plurality of digit positions thereof.

9. The system according to claim 8, wherein the plurality of digit positions of the consumer payment instrument identifier are predetermined to enable the issuer financial institution to derive the complete identifier based on the sequence of digits of the partial identifier.

10. A computerized method for funding a prepaid account issued by a financial service provider to a consumer, the method performed by an electronic device of the consumer and comprising:
communicating funding details to a remote server, the funding details provided by the consumer and comprising identification details of the prepaid account, details of a payment instrument of the consumer, and a funding amount;
generating authentication data from a predefined passcode of the consumer payment instrument and/or a one-time authentication code provided by the consumer, the authentication code communicated from an issuer financial institution of the consumer payment instrument to the consumer;
encrypting the authentication data using the authentication code and/or predefined passcode;
communicating the encrypted authentication data to the remote server for generating transaction data, the transaction data comprising the funding details, encrypted authentication data, and a transaction reference associated with the authentication code, the transaction reference communicated from the issuer financial institution to the remote server; and
receiving a funds transfer confirmation message that the prepaid account has been updated with the funding amount in response to completion of transferring the funding amount from the consumer payment instrument to a financial account of the financial service provider,
wherein said transferring occurs in response to successful validation of the transaction data, by the issuer financial institution, based on the funding details and transaction reference, said validation comprising decrypting the encrypted authentication data using the authentication code and/or predefined passcode.

11. The method according to claim 10, further comprising communicating consumer login details to the remote server before communicating the funding details, the consumer login details for authentication by the remote server.

12. The method according to claim 10 or 11, wherein the authentication data is encrypted using the authentication code and/or predefined passcode as an encryption key.

13. The method according to any one of claims 10 to 12, wherein the consumer payment instrument details comprise a partial identifier, the partial identifier being a sequence of digits at a plurality of digit positions of the complete identifier.

14. The method according to claim 13, wherein the plurality of digit positions of the consumer payment instrument identifier are predetermined to enable the issuer financial institution to derive the complete identifier based on the sequence of digits of the partial identifier.

15. An electronic system for funding a prepaid account issued by a financial service provider to a consumer, the system comprising a server configured for performing steps comprising:
receiving, from an electronic device of the consumer, funding details comprising identification details of the prepaid account, details of a payment instrument of the consumer, and a funding amount;
communicating an authentication request comprising the funding details to an issuer financial institution of the consumer payment instrument, the authentication request for communicating a one-time authentication code to the consumer;
receiving, from the issuer financial institution, a transaction reference associated with the authentication code;
receiving, from the consumer electronic device, authentication data comprising the authentication code;
generating transaction data comprising the funding details, authentication data, and transaction reference;
communicating a transaction request comprising the transaction data to the issuer financial institution for validating the transaction data based on the funding details and transaction reference;
facilitating transferring of the funding amount from the consumer payment instrument to a financial account of the financial service provider according to the transfer request in response to successful validation of the transaction data; and
updating the prepaid account with the funding amount in response to completion of said transferring of the funding amount.
